# EUROPÄISCHE PATENTSCHRIFT

(11) **EP 1 039 964 B1**
(45) Veröffentlichungstag und Bekanntmachung des Hinweises auf die Patenterteilung: **14.05.2003**
(21) Anmeldenummer: 98956926.4
(22) Anmeldetag: 18.11.1998
(51) Int. Cl.: B01D 53/50, B01D 53/80, C04B 11/02, F23J 15/00

(54) **VERFAHREN UND ANORDNUNG ZUR NUTZUNG DER RAUCHGASWÄRME IN BRAUNKOHLEKRAFTWERKEN MIT NASSER RAUCHGASENTSCHWEFELUNG**
METHOD AND DEVICE FOR EXPLOITING THE FLUE-GAS HEAT IN BROWN COAL POWER STATIONS WITH WET FLUE-GAS DESULPHURISATION
PROCEDE ET DISPOSITIF POUR UTILISER LA CHALEUR DES FUMEES DANS DES CENTRALES THERMIQUES AU LIGNITE AVEC DESULFURATION DES FUMEES PAR VOIE HUMIDE

(30) Priorität: 21.11.1997 DE 19753191
(43) Veröffentlichungstag der Anmeldung: 04.10.2000
(73) Patentinhaber: Vattenfall Europe Generation AG & Co. KG, 10115 Berlin (DE)
(72) Erfinder: ZIEHE, Helmut, D-93226 Vetschau (DE); PFEIFFER, Jürgen, D-03046 Cottbus (DE); KAHL, Dieter, D-03096 Burg (DE); KRÖDEL, Bernd, D-16356 Eiche (DE)
(86) Internationale Anmeldenummer: EP9807368
(87) Internationale Veröffentlichungsnummer: WO99026713

(56) Entgegenhaltungen:
- DE-A- 2 259 034
- DE-A- 2 649 076
- DE-A- 4 418 478
- DE-A- 19 502 635
- DE-A- 19 601 933
- DE-C- 19 620 720

## Beschreibung

Die Erfindung betrifft ein Verfahren und eine Anordnung zur Nutzung der Rauchgaswärme in Braunkohlekraftwerken mit nasser Rauchgasentschwefelung.

Bekannt ist, daß bei Einsatz von Frischwasser an Tropfenabscheidern von Rauchgaswäschern bei hoher Rauchgastemperatur am Wäschereintritt (bis 190 °C) ein hoher Frischwasserbedarf am Tropfenabscheider auftritt, um die Temperatur im Wäscher abzusenken. Mit dem Einsatz eines Rauchgaskühlers ist dies nicht erforderlich und es kann Frischwasser eingespart und REA-Umlaufwasser eingesetzt werden. Somit tritt eine verbesserte Rauchgaswärmenutzung sowie Wasserersparnis auf. Eine Reduzierung des Frischwasserverbrauches ist sowohl in stofflicher Hinsicht, vordergründig jedoch im Interesse verbesserter Rauchgaswärmenutzung und damit weiterer Wirkungsgradverbesserung wünschenswert (Stromgestehungskosten und CO₂-Emission).

Bisher bekannt ist eine Reduzierung des erforderlichen Frischwasserbedarfes und damit verbunden eine mögliche Absenkung der Rauchgas-Eintrittstemperatur am Wäscher durch den Einsatz von REA-Umlaufwasser anstelle von Frischwasser für die Bespülung der Tropfenabscheider beim Neubau-Kraftwerk Lippendorf, vgl. Projektbeschreibung REA-Umlaufwasser und Fällung gelösten Magnesiumsalzes aus Umlaufwasserteilstrom zur Vermeidung der Aufkonzentration der den REA-Betrieb störenden Salzfrachten.

Bekannt ist weiter, daß bei Verwendung von Umlaufwasser mit restlichen Salzfrachten (CaSO₄ und MgSO₄) zur Löschung von Branntkalk grobkörnige und daher für die Kalkhydratsuspension unbrauchbare Kalkhydrate entstehen, andererseits aber der Einsatz von aufbereitetem Umlaufwasser den Frischwasserverbrauch der REA besonders spürbar (bis 50 %) entlasten würde.

Bekannt ist ein Verfahren zur Aufbereitung der Grieße einer Kalkhydrat-Suspension (DE-OS 196 01 933), wobei die Nutzung von CaCO₃-Kernen, sogenannten Möpsen, in der Funktion als Mahlkörper für Kalkhydratgrieße beschrieben wird.

Die Dosierung der für die Entschwefelung notwendigen Kalkhydratsuspensionen in jeweils untere Sprühebenen von REA-Wäschern zur Anhebung des pH-Wertes in diesen Teilzonen des Wäschers zur Vermeidung der MgSO₄-Bildung wird in DE-OS 195 02 635 beschrieben.

Darüber hinaus ist ein Verfahren zur Verminderung unerwünschten Kristallwachstums von Feststoffen in Suspensionen für Rauchgasentschwefelungsanlagen bekannt, bei dem sulfatbelastete Wässer in einen Reaktionsbehälter geleitet, dort mit einem Teilstrom frischer Kalkhydrat-Suspension bis zur Sulfatausfällung in Kontakt gebracht werden, so daß in der Löscheinrichtung beim Löschen des Branntkalkes unter Zugabe von nunmehr sulfatarmem Wasser eine feinkörnige Kalkhydrat-Suspension entsteht, die keine nennenswerte Vergrießung aufweist (DE-OS 44 18 478).

Bekannt ist nach EP 0 688 239 die Kühlung von Tropfenabscheidern zur Reduzierung des bisher dort benötigten Spülwasser/Frischwasser/Umlaufwasserbedarfes sowie zur Nutzung eines Anteiles im Rauchgas vorhandener latenter Wärme.

Aus DE-OS 26 49 076 ist die Aufbereitung vom Umlaufwasser zur Herstellung von Kalksuspension bekannt.

Allen vorgenannten Verfahren ist gemeinsam, daß sie sehr partielle verfahrenstechnische Lösungen darstellen, die jede für sich keine bzw. nur geringe energetische sowie stoffliche Einspareffekte erkennen lassen. Außerdem wird unzureichend Frischwasser für die REA eingespart und über diesen Weg die Rauchgaswärme-Nutzung auf einem ungenügenden Niveau begrenzt.

Der Erfindung liegt die Aufgabe zugrunde, den Energieinhalt von Rauchgasen kohlegefeuerter Kraftwerke, auch im Bereich des Säuretaupunktes, weitestgehend zu nutzen und gleichzeitig den Frischwasserbedarf der REA spürbar zu reduzieren.

Dies wird erfindungsgemäß dadurch erreicht, daß die der REA zuzuführende Frischwassermenge spürbar reduziert wird durch Einsatz von speziell aufbereitetem REA-Umtaufwasser, geeignet zum Löschen des Kalkes, so daß die Rauchgas-Eintrittstemperatur von ≥ 130 °C um weitere 10 - 50 K abgesenkt werden kann, womit eine verstärkte Rauchgaswärme-Nutzung einhergeht.

Die Aufbereitung des zur Kalklöschung benötigten Umlaufwasseranteils erfolgt so, daß die die Grießbildung verursachenden gelösten Salzfrachten von CaSO₄ und MgSO₄ eine Konzentration von in Summe 2 g/l nicht überschreiten. Um der Gefahr auch der geringsten Grießbildung zu begegnen, wird erfindungsgemäß Branntstückkalk als Absorbens anstelle des bisher vorzugsweise verwendeten Feinkalkes eingesetzt und in einer Trommel abgelöscht, in der die sich beim Löschen bildenden "Möpse" (nicht gebrannte CaCO₃-Kerne der Stückkalkes) als materialimmanente Mahlkörper zum Aufmahlen des Kalkhydrat-Grießes genutzt und anschließend ausgeschleust werden. Die Trommel ist deshalb mit einer Rückführungseinrichtung für diese "Möpse" ausgestattet, um neben der Entsorgung/Abgabe (32) aus dem System immer in Abhängigkeit vom Grießanfall Mahlkörper mit ausreichender Korngröße in der Trommel zu haben. Weiter wird dafür gesorgt, daß die Vorbelastung des Umtaufwassers mit der MgSO₄-Salzfracht kleiner als bei bisher bekannten Verfahren ist, was erfindungsgemäß durch eine Hoch-pH-Fahrweise im Bereich der unteren Sprühebenen des Rauchgaswäschers erreicht wird (pH < 8,3). Vorrichtungsmäßig beinhaltet diese die Dosierung der Kalkhydratsuspension in diejenigen Wäschersuspensionskreisläufe, die die unteren Sprühebenen versorgen (7), so daß die Aufbereitungstechnologie selbst keine bemerkenswerten Zusatzaufwendungen verursacht. Diese Hoch-pH-Fahrweise vermindert einerseits überraschenderweise die Konzentration der MgSO₄-Fracht mit sehr hoher Löslichkeit und verhindert das Einbinden von CO₂-Anteilen des Rauchgases durch Kalkhydrat zu CaCO₃ im Wäscher (pH < 8,3). Die Wäschersuspensionskreisläufe incl. der Kreislauf zur Gipsausschleusung werden auf diese Weise mit einer MgSO₄-Fracht von maximal 4 bis 10 g/l gefahren, wobei die Einzelwerte vom MgO-Anteil des Branntkalks und von der SO₂-Fracht des Rauchgases abhängen. Bei gleichem Einbindegrad von SO₂ läßt sich der Wäscher mit bis zu 25 % verringertem L/G-Verhältnis betreiben.
Die aus dem Rückführsystem kontinuierlich ausgehaltene Menge von CaCO₃ ("Möpse") wird solchen Kraftwerken zugeführt, die eine nasse Kalksteinmahlanlage betreiben und in der REA Kalksteinmehl-Suspension einsetzen.

Durch die Erfindung werden folgende Vorteile erreicht:
1. Der KW-Wirkungsgrad (netto) kann je nach bisheriger Rauchgas-Eintrittstemperatur von ≥ 130 °C in den Rauchgaswäscher um 0,4 - 0,5 %-Punkte verbessert werden, woraus sich eine elektrische Leistung bestimmt, die keinen zusätzlichen Kohleverbrauch verursacht.
2. Durch den Einsatz des gezielt aufbereiteten REA-Umlaufwassers wird der Frischwasserbedarf um ca. 50 % reduziert. Die erfindungsgemäße Verknüpfung sichert außerdem eine minimale Investkostenbelastung.
3. Durch Bezug von Stückkalk anstelle von Feinkalk reduzieren sich die Betriebskosten für das benötigte Absorbens um 10 ... 15 %.
4. Die Investitionskosten für die Absorbensentladung, -lagerung, -aufbereitung unterscheiden sich bei Verwendung von Stückkalk gegenüber Feinkalk nur unwesentlich, so daß die Vorteile aus der Entlastung o. g. Betriebskosten nicht geschmälert werden; bei Realisierung in einem 900-MW-Braunkohlekraftwerk reduzieren sich damit die Stromgestehungskosten um ca. 0,03 Pf/kWh bei Einsatz dieses Blockes im Grundlastbereich bzw. um ca. 1,8 Mio. DM/a.
5. Die Hoch-pH-Fahrweise gestattet, daß L/G-Verhältnis um 20 - 25 % zu reduzieren, wodurch die Sprühebenenanzahl des Wäschers und damit sowohl Investkosten als auch Betriebskosten an der REA einzusparen sind.

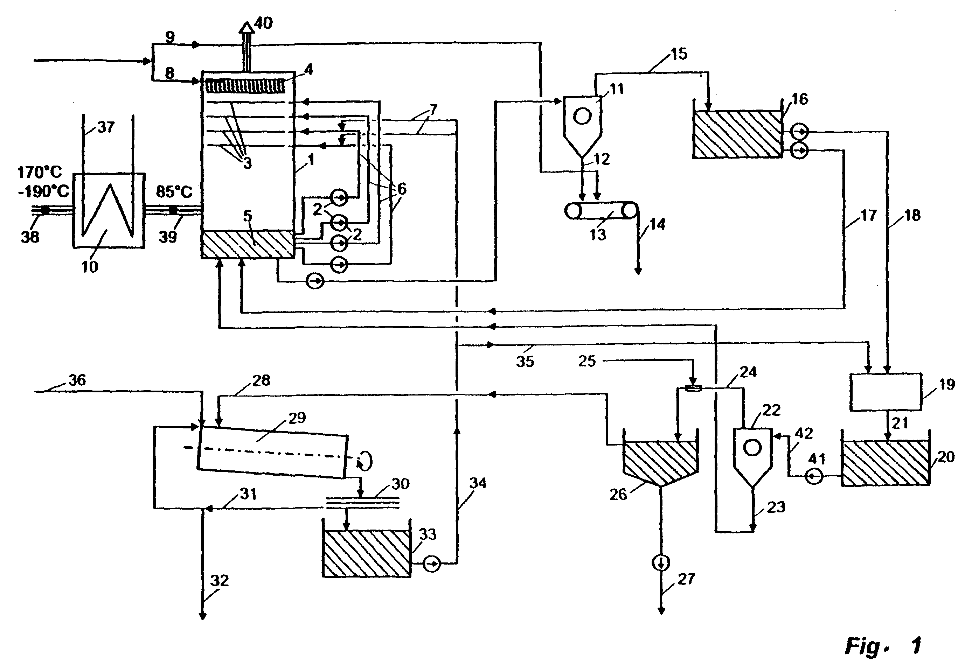

Figur 1 zeigt ein Ausführungsbeispiel des erfindungsgemäßen Verfahrens sowie die Anordnung erfindungsgemäßer Komponenten/Baugruppen innerhalb des Verfahrens.

Der Stückkalk 36 wird in der Trommel 29 mit aufbereitetem REA-Umlaufwasser 28, dessen Fracht löslicher Ca- und Mg-Salze im Fällungsreaktor 19, im Zyklon 22 und im Eindicker 26 bis auf ca. 2 g/l reduziert wurde, gelöscht. Bedingt durch den gewollten Einsatz von Stückkalk, der im Kernbereich noch ungebrannte Kalksteinanteile besitzt, bildet sich eine Kalkhydratsuspension, gemischt mit CaCO₃-Steinen, den sog. "Möpsen", die durch die Rüttelsiebe 30 ausgehalten und anteilig über die Rückführleitung 31 erneut in die Löschtrommel 29 aufgegeben werden und jetzt als "Mahlkörper" für die Mahlung des sich beim Löschvorgang mit Umlaufwasser trotz geringer restlicher Salzfracht bildenden Kalkhydratgrieße fungieren, so daß sich eine verwendungsfähige Kalkhydratsuspension ergibt, im Suspensionsvorlagebehälter 33 gesammelt und mittels Suspensionspumpen über die Suspensionsleitung 34 dem Wäschersuspensionskreislauf in und außerhalb des REA-Wäschers 1 mit Wäschersumpf 5, Tropfenabscheider 4, Sprühebenen 3, Suspensionspumpen 2, Suspensionsleitungen 6 zugeführt wird. Die Aufgabe der Kalkhydratsuspension erfolgt speziell über die Dosierleitungen 7 auf die beiden Wäschersuspensionskreise, die die unterste und die nachfolgende Sprühebene 3 versorgen, um gezielt und nur in diesem Bereich des Wäschers 1 einen pH-Wert < 8,3 zu fahren, also in dieser Wäscherzone eine sogenannte Hoch-pH-Fahrweise zu realisieren, um die Bildung der hochlöslichen MgSO₄-Salzes reduzieren und die Reaktion von Ca(OH)₂ mit CO₂ des Rauchgases zu CaCO₃ gänzlich verhindern zu können. Das zum Kalklöschen benötigte Umlaufwasser 28 wird aus dem Gipsentwässerungskreislauf, speziell aus dem Sammelbehälter 16 abgezogen und über Leitung 18 der Umlaufwasseraufbereitung mit den Komponenten 19, 20, 22, 26 zugeführt. Der Fällungsreaktor 19 wird über Leitung 35 mit derselben Kalkhydratsuspension 34 versorgt, wie diese im SO₂-Einbindeprozeß im Wäscher 1 Verwendung findet. Aus dem Eindicker 26 gelangen die anteilig ausgehaltene Salzfracht und die Fällungsprodukte sowie nicht umgesetztes MgO/Mg(OH)₂ aus dem Wäscherkreis über die Leitung 27 zur Ascheanfeuchtung. Dem Eindicker 26 wird ein Flockungshilfsmittel 25 in den Zyklonüberlauf 24 zugegeben.

Mit kontinuierlicher Zuführung von Stückkalk 36 zur Löschtrommel mit zusätzlicher Mahlfunktion wird ebenfalls kontinuierlich der überschüssige Mengenanteil "Möpse" 32 aus dem vorgestellten Bilanzkreis abgegeben. Analog wird mit dem mitteis Zyklon 11 und Vakuum-Bandfilter 13 entwässerten REA-Gips 14 verfahren. Der Einsatz von Stückkalk 36 mit aufbereitetem bzw. gefälltem Umlaufwasser 28 ermöglicht die Rohgaskühlung mittels Rauchgaskühler 10 und Kühlmedium 37 von 170 ... 190 °C bis auf ca. 85 °C am Eintritt des REA-Wäschers 1.

### Aufstellung der verwendeten Bezugszeichen

- 1: Wäscher
- 2: Wäschersuspensionspumpe
- 3: Sprühebene
- 4: Tropfenabscheider
- 5: Wäschersumpf
- 6: Wäschersuspensionsleitung
- 7: Dosier- und Aufgabeleitung
- 8: Frischwasserleitung
- 9: Frischwasserleitung
- 10: Rauchgaskühler
- 11: REA-Gips-Entwässerungszyklon
- 12: Naßgipszuführung
- 13: Vakuum-Bandfilter
- 14: REA-Gips-Entsorgungssystem
- 15: Zyklonüberlauf
- 16: Umlaufwasserbehälter
- 17: Rückführleitung Hauptumlaufwasser
- 18: Leitung
- 19: Fällungsreaktor
- 20: Fällungszwischenbehälter
- 21: Umlaufwasserleitung
- 22: Zyklonstufe
- 23: Rückführleitung
- 24: Zyklonüberlauf
- 25: Flockungshilfsmittel
- 26: Eindicker
- 27: Entsorgungsleitung
- 28: Klarphase
- 29: Kalklöschtrommel
- 30: Schüttelsieb
- 31: Rückführleitung
- 32: Entsorgungsleitung
- 33: Suspensionsvorlagebehälter
- 34: Kalkhydratversorgungsleitung
- 35: Zuführungsleitung
- 36: Zuführungssystem
- 37: Kühlmedium
- 38: Rauchgaskanal
- 39: Rauchgaskanal
- 40: Reingas-Kanal
- 41: Pumpe
- 42: Förderleitung

## Patentansprüche

1. Verfahren zur Nutzung von Rauchgaswärme in Braunkohlekraftwerken mit nasser Rauchgasentschwefelung (REA), wobei ein Ablöschen von Kalk erfolgt und die entstehende Kalkhydrat-Suspension einem Wäscher (1) über mehrere Sprühkreisläufe aufgegeben sowie Gips ausgeschleust und entwässert wird, wobei im Rauchgaskanal vor dem Wäscher (1) eine Temperaturabsenkung des Rohgases von 170 - 190°C auf ca. 85 °C realisiert wird, wobei das abgezogene Wasser als REA-Umlaufwasser in den Wäscher (1) zurückgeführt wird, so daß einerseits durch eine Hoch-pH-Fahrweise des Wäschers (1) sowie eine 3-stufige chemisch/physikalische Behandlung des ausgeschleusten Umlaufwassers, nämlich einer Fällung löslicher Ca- und Mg-Salze, einer Abscheidung sowie einer Eindickung, die Einstellung einer maximalen Konzentration von gelösten Salzen in einer Höhe von < 2 g/l im zum Ablöschen vorgesehenen REA-Umlaufwasser-Anteil erreicht und dadurch eine Grießbildung beim Ablöschen mit diesem REA-Umlaufwasser minimiert sowie andererseits durch Verwendung von an sich bekanntem Branntstückkalk als Absorbens der Einsatz von CaCO₃-Kernen (sog. Möpse) realisiert wird, wobei diese materialimmanenten Mahlkörper zum Aufmahlen von restlich entstehendem Kalkhydrat-Grieß genutzt, anschließend ausgeschleust und in die Mahleinrichtung (Kalklöschtrommel 29) rückgeführt werden und daß die erzeugte Kalkhydratsuspension (Kalkhydratversorgungsleitung 34) direkt und ausschließlich in die unteren der insgesamt vorhandenen Sprühkreisläufe eingeleitet wird.

2. Verfahren nach Anspruch 1, **gekennzeichnet dadurch, daß** unter Hoch-pH-Fahrweise die Einhaltung eines pH-Wertes in der Suspension der unteren Sprühebenen (3) im Wäscher (1) von > 7,8 bis 8,3 verstanden wird.

3. Verfahren nach Anspruch 1, **gekennzeichnet dadurch, daß** die ausgeschleusten Möpse (32) Kraftwerken mit einer nassen Kalksteinmahlanlage zugeführt und dort zur Herstellung der REA-Kalksteinmehl-Suspension eingesetzt werden.

4. Verfahren nach Anspruch 1, **gekennzeichnet dadurch, daß** das ausgeschleuste REA-Umlaufwasser durch Fällung, Eindickung und durch Zugabe von Flockungshilfsmitteln (25) aufbereitet wird.

5. Verfahren nach Anspruch 1, **gekennzeichnet dadurch, daß** das über die Leitung (27) ausgefällte REA-Wasser (27) zur Ascheanfeuchtung eingesetzt und gemeinsam mit dieser entsorgt wird.

6. Verfahren nach Anspruch 1, **gekennzeichnet dadurch, daß** in den Überlauf (24) des Zyklons (26) ein Flockungshilfsmittel (25) zugegeben wird.

7. Anordnung zur Durchführung eines Verfahrens nach einem oder mehreren der Ansprüche 1-6, nämlich zur Nutzung von Rauchgaswärme in Braunkohlekraftwerken mit nasser Rauchgasentschwefelung (REA), wobei ein Rauchgaswäscher (1) mit einem Tropfenabscheider (4) und mehreren Sprühebenen (3) für eine Kalkhydrat-Suspension im Oberteil sowie einem Sumpf (5) im Unterteil angeordnet ist und der Sumpf (5) über Pumpen (2) mit den Sprühebenen (3) verbunden ist, wobei der Wäschersumpf (5) über einen an sich bekannten REA-Gips-Entwässerungszyklon (11) und einen Umlaufwasserbehälter (16) einerseits mit einem Fällungsreaktor (19) und andererseits mit dem Wäschersumpf (5) verbunden ist und der Fällungsreaktor (19) wiederum über eine Umlaufwasserleitung (21) mit einem Fällungszwischenbehälter (20) und einer weiteren Zyklonstufe (22) gekoppelt ist, wobei dieser seinen Überlauf (24) einem Eindicker (26) und der mit Grobkorn angereicherte Umlaufwasseranteil (23) dem Wäschersumpf (5) zuleitet, und daß die Klarphase (28) des Eindickers (26) mit einer drehbaren Kalklöschtrommel (29) verknüpft ist, die über eine Siebeinrichtung (30) und einen Suspensionsvorlagebehälter (33) mit den unteren, der insgesamt vorhandenen Sprühebenen (3) und Überleitung (35) mit dem Fällungsreaktor (19) in Verbindung steht.

8. Anordnung nach Anspruch 7, **gekennzeichnet dadurch, daß** vor dem Rauchgaswäscher (1) ein säurefester Rauchgaskühler (10) angeordnet ist.

9. Anordnung nach Anspruch 7, **gekennzeichnet dadurch, daß** die Siebeinrichtung (30) über Leitung (31) mit dem Einlauf der Kalklöschtrommel (29) und/oder einer Entsorgungsleitung (32) verbunden ist.

10. Anordnung nach Anspruch 7, **gekennzeichnet dadurch, daß** der Eindicker (26) eine Entsorgungsleitung (27) für eingedicktes REA-Wasser aufweist.

11. Anordnung nach Anspruch 7 **gekennzeichnet dadurch, daß** der Ablauf des REA-Gips-Entwässerungszyklons (11) mit einem Vakuum-Bandfilter (13) verbunden ist.

## Claims

1. A method for utilizing the heat content of flue gas in lignite-fired power plants equipped with wet flue-gas desulfurization systems (FGDS), where a slaking of lime takes place and the resultant hydrated-lime suspension is sent to a scrubber (1) via several sprayer circuits and gypsum is ejected and dehydrated, where a reduction in the temperature of the raw gas from 170°C - 190°C to about 85°C take place in the flue-gas channel, ahead of the scrubber (1), and where the extracted water is recirculated to the scrubber (1) in the form of recirculating FGDS-water, in order that both high-pH operation of the scrubber (1), a triple-stage chemical/physical treatment of the ejected recirculating water namely, a precipitation of soluble Ca-salts and Mg-salts, extraction and thickening that yields a maximum concentration of dissolved salts of < 2 g/l in that portion of the recirculating FGDS-water provided for slaking purposes will be achieved and thereby the formation of grit during slaking with that recirculating FGDS-water minimized, and through use of the, known, burnt chunk lime, as absorbent the use of CaCO₃-clusters (so-called "clumps") is implemented, where these, from the nature of the material involved, inherent grinding media, are used for grinding any residual hydrated lime grit that may arise, subsequently ejected, and recirculated to the grinding device (the lime-slaking drum (29), and the hydrated-lime suspension (in the hydrated-lime supply line (34)) generated is directly, and exclusively, fed to the lowermost of the entire complement of sprayer circuits present.

2. A method according to claim 1, wherein "high-pH operation" is understood as meaning maintaining a pH ranging from > 7.8 to 8.3 in the suspension in the lowermost sprayer levels (3) in the scrubber (1).

3. A method according to claim 1, wherein the ejected clumps (32) are supplied to power plants equipped with wet limestone-grinding systems and used there for manufacturing FGDS limestone-meal suspension.

4. A method according to claim 1, wherein the ejected recirculating FGDS-water is treated by means of precipitation, thickening, and addition of flocculation agents (25).

5. A method according to claim 1, wherein the FGDS-water (27) whose Ca-salts and Mg-salts have been precipitated out in transiting the line (27) is used for dampening ash and disposed of jointly therewith.

6. A method according to claim 1, wherein a flocculating agent (25) is introduced into the overflow line (24) on the cyclone (26).

7. An arrangement for carrying out a method according to one or more of claims 1 - 6, namely an arrangement for utilizing the heat content of flue gas in lignite-fired power plants equipped with wet flue-gas desulfurization systems (FGDS), where a flue-gas scrubber (1) equipped with a droplet-extractor (4) and several sprayer levels (3) for spraying a hydrated-lime suspension are arranged in its upper section and a sump (5) is arranged in its lower section, and the sump (5) is connected to the sprayer levels (3) by pumps (2), where the scrubber's sump (5) is connected to a precipitation reactor (19) and the scrubber's sump (5) via a, known, FGDS gypsum-dehydration cyclone (11) and a recirculated-water tank (16), and the precipitation reactor (19) is, in turn, connected to an precipitation buffer tank (20) and another cyclone stage (22) by a water-recirculation line (21), where the overflow (24) from the cyclone stage (22) transports the output of a thickener (26) and that portion of recirculated water (23) that has been enriched with coarse granulate to the scrubber's sump (5), and the clarified phase (28) from the thickener (26) is linked to a rotatable lime-slaking drum (29) that is connected to the lowermost of the entire complement of sprayer levels (3) by a sieving device (30) and the overhead line (35) is connected to the precipitation reactor (19).

8. An arrangement according to claim 7, wherein an acid-resistant flue-gas cooler (10) is arranged ahead of the flue-gas scrubber (1).

9. An arrangement according to claim 7, wherein the sieving device (30) is connected to the inlet of the lime-slaking drum (29) and/or a drain line (32) by line (31).

10. An arrangement according to claim 7, wherein the thickener (26) has a drain line (27) for thickened FGDS-water.

11. An arrangement according to claim 7, wherein the drain on the FGDS gypsum-dehydration cyclone (11) is connected to a vacuum belt filter (13).

## Revendications

1. Procédé pour la récupération de la chaleur des gaz de fumée dans les centrales thermiques fonctionnant à la lignite avec désulfuration humide des gaz de fumée, avec extinction de chaux et où la suspension de chaux éteinte qui en résulte est introduite dans un laveur (1) au moyen de plusieurs circuits de pulvérisation et du plâtre est éclusé et déshydraté, où une baisse de la température du gaz brut de 170- 190 °C à env. 85 °C est réalisée dans le canal des gaz de fumée en amont du laveur (1), l'eau retirée retournant dans le laveur (1) en tant qu'eau de re-circulation de désulfuration, de façon à ce que, d'une part, grâce à un fonctionnement du laveur (1) à pH élevé et un traitement physico-chimique en trois étapes de l'eau de re-circulation de désulfuration éclusée, à savoir une précipitation des sels Ca et Mg solubles, une séparation et un épaississement, une concentration maximale de sels en solution <2 g/l soit obtenue dans la partie de l'eau de re-circulation de désulfuration destinée à l'extinction, permettant ainsi de minimiser la formation de grumeaux lors de l'extinction avec cette eau de re-circulation de désulfuration et que, d'autre part, par l'emploi de chaux vive en morceaux en tant que produit absorbant, l'utilisation de noyaux de CaCO3 est rendue possible, ces éléments de broyage inhérents au matériau servant à broyer les grumeaux de chaux éteinte résiduels qui se forment, lesdits noyaux étant ensuite éclusés et réintroduits dans l'installation de broyage (tambour d'extinction de la chaux (29), et la suspension de chaux éteinte (tuyauterie d'alimentation de chaux éteinte (34)) étant directement et exclusivement introduite dans les circuits inférieurs des circuits de pulvérisation présents.

2. Procédé selon la revendication 1 **caractérisé par le fait que** l'on entend par fonctionnement à pH élevé le maintien d'une valeur pH >7,8 à 8,3 dans la suspension des niveaux inférieurs (3) du laveur (1).

3. Procédé selon la revendication 1 **caractérisé par le fait que** les noyaux Ca-C03 (32) éclusés sont ensuite acheminés dans des centrales thermiques pourvues d'une installation de broyage de pierres à chaux humides pour y être utilisés pour la production de la suspension de pierre à chaux.

4. Procédé selon la revendication 1 **caractérisé par le fait que** l'eau de re-circulation de désulfuration subit une préparation par précipitation, épaississement et adjonction d'agents floculants (25).

5. Procédé selon la revendication 1 **caractérisé par le fait que** l'eau de re-circulation de désulfuration précipitée par la tuyauterie (27), est utilisée pour le mouillage des cendres et est éliminée conjointement avec celles-ci.

6. Procédé selon la revendication 1 **caractérisé par le fait qu'**un agent de floculation (25) est introduit au niveau du trop-plein (24) du cyclone (26).

7. Installation pour la réalisation d'un procédé selon une ou plusieurs revendications 1 à 6, c.-à-d. pour la récupération de la chaleur des gaz de fumée dans les centrales thermiques à la lignite pourvues d'une désulfuration humide des gaz de fumées, disposant d'un laveur de gaz de fumée (1) comportant un dévésiculeur (4) et plusieurs niveaux de pulvérisation (3) d'une suspension de chaux éteinte dans la partie supérieure et un puisard (5) dans la partie inférieure, où le puisard (5) est relié par des pompes (2) aux niveaux de pulvérisation (3), où le puisard (5) du laveur est relié, d'une part à un réacteur de précipitation (19) par l'intermédiaire d'un cyclone (11) de déshydratation du plâtre de désulfuration connu en soi et d'un réservoir d'eau de re-circulation de désulfuration (16) et, d'autre part avec le puisard (5) du laveur, et où le réacteur de précipitation (19) lui-même est couplé par l'intermédiaire d'une tuyauterie de re-circulation (21) à un réservoir de précipitation intermédiaire (20) et un autre étage de cyclone (22), dont le trop-plein (24) se déverse dans un épaississeur (26) et dont la part de l'eau de re-circulation de désulfuration (23) enrichie de gros grains retourne au puisard (5) du laveur, et la phase décantée (28) de l'épaississeur (26) est reliée au tambour rotatif d'extinction de la chaux (29), lequel est relié aux niveaux de pulvérisation inférieurs parmi les niveaux existants (3) par l'intermédiaire d'un dispositif de criblage (30) et d'un réservoir d'alimentation (33) pour la suspension et, par l'intermédiaire d'une tuyauterie de liaison (35), au réacteur de précipitation (19).

8. Installation selon la revendication 7, **caractérisée par le fait que** le laveur des gaz de fumée (1) est précédé d'un refroidisseur (10) de gaz de fumée résistant aux acides.

9. Installation selon la revendication 7 **caractérisée par le fait que** le dispositif de criblage (30) est relié à l'entrée du tambour d'extinction de la chaux (29) par une tuyauterie (31) et/ou une tuyauterie d'élimination (32).

10. Installation selon la revendication 7 **caractérisée par le fait que** l'épaississeur (26) est pourvu d'une tuyauterie d'élimination (27) pour l'eau de re-circulation de désulfuration épaissie.

11. Installation selon la revendication 7 **caractérisée par le fait que** la sortie du cyclone de déshydratation du plâtre de désulfuration (11) est reliée à un filtre à bande à vide (13).
